# FASCICULE DE BREVET EUROPEEN

(11) **EP 1 166 648 B1**
(45) Date de publication et mention de la délivrance du brevet: **08.03.2006**
(21) Numéro de dépôt: 00113858.5
(22) Date de dépôt: 30.06.2000
(51) Int. Cl.: A23L 1/168

(54) **Grains de riz instantanés**
Instant Reiskörner
Instant rice grains

(43) Date de publication de la demande: 02.01.2002
(73) Titulaire: SOCIETE DES PRODUITS NESTLE S.A., 1800 Vevey (CH)
(72) Inventeur: Dupart, Pierre, 8053 Zuerich/Witikon (CH); Bloechlinger, Kurt, 8310 Kemptthal (CH); Roth, Niklaus, 8451 Kleinandelfingen (CH); Schmutz, Walter, 8604 Volketswil (CH)
(74) Mandataire: Thomas, Alain

(56) Documents cités:
- EP-A- 0 226 375
- EP-A- 0 369 175
- EP-A- 0 913 096
- US-A- 4 435 435

## Description

La présente invention concerne des grains de riz instantanés cuits-extrudés reconstituables à froid ainsi que leur procédé de fabrication.

Il existe des pâtes de riz à cuisson rapide préparées à partir de farine de riz prégélatinisée qui est ensuite formée à l'aspect désiré tel que des grains de riz.

Cependant les différents produits existant nécessitent une cuisson avant consommation.

Différentes gommes sont utilisées pour améliorer la stabilité des pâtes et des pâtes de riz. L'utilisation de telle gomme comme les alginates permet de retarder la rétrogradation de l'amidon lorsque l'on souhaite conserver, à l'état réfrigéré, les produits cuits. JP9121801 décrit des nouilles de riz contenant du propylène glycol alginate. Cependant, encore, ces produits nécessitent une cuisson complète à la vapeur ou dans l'eau bouillante avant consommation.

EP-A-0 913 096 enseigne un procédé pour la préparation de graines de riz cuits-extrudés reconstituables, comprenant les étapes de cuisson-extrusion d'un mélange de farine de riz, d'eau et d'huile hydrogénée de manière à gélatiniser partiellement l'amidon; extrusion sous forme de graines de riz et séchage. De 0,2-2,5% d'hydrocolloïdes, préférablement des alginates, peuvent être ajoutés avant ou pendant l'étape d'extrusion.

EP-A-0 226 375 enseigne un procédé pour la préparation d'un produit à base de riz à cuisson rapide et avec une bonne intégrité texturale après reconstitution, comprenant les étapes d'extrusion d'un mélange comprenant de la farine de riz non-gélatinisée, un agent complexant l'amidon, préférablement des monoglycérides, et une gomme, p.ex. gomme de xanthane, CMC, alginates, carraghénane, suivi par une étape de séchage.

Des produits du type pâtes ou nouilles de riz précuits existent. Il s'agit pour la plus part de produits obtenus par cuisson-extrusion de farine de riz prégélatinisée. Cependant de tels procédés nécessitent des valeurs d'énergie mécanique très élevées et les nouilles ou grains de riz ainsi obtenus présentent une texture molle assez éloignée de la texture de grains de riz classiques. De plus, ils nécessitent toujours une légère cuisson avant consommation.

Des alginates peuvent être utilisés pour conférer au produit cuit-extrudé une texture plus ferme proche d'un grain de riz. Cependant une étape de gélification de ces alginates est nécessaire après l'étape de cuisson-extrusion. Une telle gélification est réalisée à l'aide d'un bain des produits cuits-extrudés dans une solution de aqueuse de chlorure de calcium. La gélification peut aussi être réalisée grâce à une vaporisation à l'aide d'une solution de chlorure de calcium après l'étape de cuisson extrusion. La prise en eau que l'on observe lors de cette étape nécessite une étape supplémentaire de séchage. Une telle étape supplémentaire est particulièrement longue, onéreuse et difficile à mettre en oeuvre. De plus, une telle combinaison d'étapes « humides » et d'étapes « sèches » n'est pas souhaitable au sein d'une ligne de fabrication de produits tels que de pâtes de riz. Cependant, bien que de texture acceptable lors de la reconstitution, de tels grains de riz, quelques minutes après reconstitution voient leur texture évoluer vers un ramollissement prononcé, ce qui est particulièrement néfaste à la qualité perçue par le consommateur.

Ainsi, le but de la présente invention consiste à fournir des grains de riz reconstituables dans l'eau chaude ou froide qui conservent leur forme après réhydratation et qui présentent une texture similaire aux grains de riz cuits traditionnels ainsi qu'un procédé simple de fabrication de tels grains de riz.

A cet effet, les grains de riz reconstituables à froid selon la présente invention sont cuits-extrudés et comprennent de la farine de riz dont le taux de gélatinisation est compris entre 50 et 95%, de 5 à 13% d'eau de la matière grasse et du polypropylène glycol alginate.

De même, le procédé de fabrication de grains de riz selon la présente invention comprend les étapes de cuisson d'un mélange de farine de riz, d'eau, de matière grasse et de polypropylène glycol alginate dans un cuiseur-extrudeur à une température comprise entre 70 et 150°C de manière à gélatiniser partiellement l'amidon et extruder le mélange sous forme de grains de riz.

On a ainsi pu constater de manière surprenante que l'utilisation de polypropylène glycol alginate permet d'obtenir des grains de riz cuit-extrudés reconstituables instantanément présentant une texture dont la fermeté est très similaire à celle des grains de riz cuits traditionnels. L'utilisation de polypropylène glycol alginate confère au produit fini en sortie d'extrudeur une texture ferme proche du produit traditionnel sans qu'aucune étape de gélification subséquente à la cuisson-extrusion soit nécessaire. Ainsi, par rapport à la mise en oeuvre d'alginate nécessitant un bain ou une pulvérisation à l'aide d'une solution aqueuse de chlorure de calcium suivi d'un séchage, le procédé selon la présente invention permet d'obtenir des grains de riz en une seule étape. Aussi de manière surprenante, la viscosité est développée par le polypropylène glycol alginate dans le mélange au sein de l'extrudeur, ce qui confère la texture au produit fini, et cette viscosité n'est pas affectée par les fortes forces de cisaillement que l'on observe couramment dans un extrudeur. Le mélange acquiert sa cohésion au cour de la cuisson-extrusion et la conserve jusqu'après l'extrusion à travers une filière, sous la forme de grains de riz.

Dans le procédé selon la présente invention le cuiseur-extrudeur peut être un extrudeur mono-vis ou bi-vis tournant à une vitesse de l'ordre de 120 à 250 tours par minutes, à une pression de l'ordre de 50 à 150 bar, par exemple. La cuisson du mélange peut être réalisée dans des portions chauffantes d'un extrudeur dans lesquelles le mélange peut être chauffé, compressé et cisaillé de manière à former une masse cuite plastique. Cette masse cuite peut être extrudée à travers une filière grâce à une vis ou une double vis de l'extrudeur.

Pour la mise en oeuvre de ces opérations de mélange, malaxage, cuisson, pétrissage, cisaillement et extrusion, un cuiseur-extrudeur courant de l'industrie alimentaire peut être utilisé, de préférence un extrudeur double vis. Un extrudeur d'une longueur comprise entre 800 et 1800 mm ou plus peut être utilisé, ce qui permet un temps de résidence de l'ordre de 10 à 90 secondes, par exemple.

L'opération de cuisson-extrusion peut être réalisée au sein d'un cuiseur extrudeur du type CLEXTRAL® BC 45, d'une longueur de 1500 mm, par exemple. Cet équipement comprend un fourreau à l'intérieur duquel sont disposées deux vis tournant dans le même sens et s'engrenant l'une dans l'autre. Le fourreau est thermostaté, ce qui permet le chauffage et/ou le refroidissement de la matière en cours de malaxage.

Le cuiseur-extrudeur peut comprendre 4 à 6 zones de thermostatation, par exemple. Dans la première zone, la configuration des vis et la température (température ambiante et pas de vis assez important) peuvent être telles que les ingrédients sont mélangés et transportés. Dans les deuxième et troisième zones suivantes, la matière peut être transportée, pétrie, malaxée grâce à un pas de vis dont la valeur diminue progressivement. De plus, dans ces zones, la matière peut être cuite grâce à une augmentation progressive de la température depuis la température ambiante dans les premières zones jusqu'aux environ de 130°C. Enfin, dans la ou les dernières zones, la température peut être abaissée jusqu'aux environs de 50 à 80°C ce qui permet de ne pas endommager la masse cuite partiellement gélatinisée. La régulation thermique dans les différentes zones du cuiseur-extrudeur peut être assurée par des dispositifs de chauffage par induction, par exemple. Le profil de température depuis la zone d'entrée jusqu'à la sortie peut donc présenter la forme d'une cloche. Une augmentation progressive de la température dans les trois ou quatres premières zones permet de cuire le produit et de gélatiniser 50 à 95% de l'amidon, préférentiellement 75 à 85%, environ. Par la suite, la diminution de température dans la ou les dernières zones permet de ne pas endommager d'avantage les grains d'amidon et de conserver le taux de gélatinisation.

Dans la dernière zone, la matière peut être pétrie et forcée à travers une filière disposée à l'extrémité de la ou des vis de l'extrudeur. La filière peut comprendre une ou plusieurs ouvertures combinées avec un système de découpe permettant l'obtention de grains de riz, par exemple. On peut ainsi combiner une filière comportant une ou des orifices circulaires avec une lame en rotation ou en translation disposée . Un boudin de diamètre de l'ordre de 0,5 à 3 mm, peut être extrudé et coupé en tronçons de l'ordre de 2 à 8 mm, par exemple, ce qui permet d'obtenir des particules dont la forme et l'aspect est proche de grains de riz. Dans une autre forme de réalisation, la filière peut comprendre une ou plusieurs ouvertures de section oblongue de dimension longitudinale comprise entre 2 et 8 mm et de dimension transversale comprise entre 0,5 et 3 mm, par exemple. La combinaison d'une telle filière avec un système de découpe rotatif ou translatif permet d'obtenir des particules oblongues d'aspect proche de grains de riz, par exemple.

Le produit ainsi cuit-extrudé en sortie de filière présente un taux d'humidité qui peut être compris entre 13 et 30%, environ. Le produit obtenu selon le procédé peut être séché par tout moyen adéquat connu de l'homme du métier, ceci jusqu'à un taux d'humidité compris entre 5 et moins de 13%, et de préférence entre 5 et 7%.

On peut réaliser, pour la mise en oeuvre de ce procédé, un mélange initial comprenant en pourcentage en poids environ 65 à 85% de farine de riz, environ 0,1 à 3% de polypropylène glycol alginate, environ 0,1 à 1% d'un émulsifiant ou d'un mélange d'émulsifiants, environ 13 à 30% d'eau et environ 3 à 9% de matière grasse, par exemple. Ce mélange est introduit à l'entrée d'un cuiseur extrudeur bi-vis, par exemple. Ce mélange peut être malaxé et progressivement chauffé à l'intérieur d'un extrudeur bivis jusqu'aux environs de 90 à 130°C, par exemple. Après cela, la matière peut être refroidie aux alentours de 50 à 80°C, par exemple. Le produit cuit et malaxé peut être ensuite extrudé à travers une filière, par exemple. La filière peut être une plaque équipée d'un système de découpe comprenant des trous dont la forme est adéquate pour le formage de grains de riz, par exemple.

En sortie de cuiseur-extrudeur, les grains de riz peuvent présenter un taux d'humidité compris entre 13 et 30% environ. Ces grains peuvent être séchés par des moyens connus de l'homme du métier de manière à obtenir des produits présentant un taux d'humidité compris entre 5 et moins de 13%, de préférence entre 5 et 7% environ, par exemple.

On peut réaliser les opérations de mélange et/ou pétrissage en un temps de séjour de 30 à 90 secondes, dans l'extrudeur ou le malaxeur sous une pression de l'ordre de 50 à 150 bars, tout en faisant tourner la ou les vis à une vitesse comprise entre 120 et 250 tours par minute, par exemple.

Le mélange peut contenir différentes qualités de farine de riz. L'émulsifiant peut être ajouté, dans une quantité comprise entre 0,1 et 1%, par exemple, au mélange pulvérulent de départ. Il peut s'agir d'un monoglyceride, un mélange de monoglycérides ou un dérivé, utilisés seuls ou en mélange, du type Myvaplex® commercialisé par la société DOLDER (Suisse), par exemple. Un agent conservateur peut être ajouté à hauteur de 0,5% environ tel que du diphosphate de sodium, par exemple.

La matière grasse peut être une huile ou une graisse végétale ou animale, utilisée seule ou en mélange. Il peut s'agir d'huile de tournesol, d'arachide de palme, plus ou moins hydrogénées, par exemple.

La présente invention concerne aussi des grains de riz cuits-extrudés reconstituables à froid comprenant de la farine de riz dont le taux de gélatinisation est compris entre 50 et 95%, de préférence entre 75 et 85%, de l'eau, de la matière grasse et du polypropylène glycol alginate.

Les grains de riz obtenus en sortie de cuiseur-extrudeur selon le présent procédé peuvent présenter un taux d'humidité compris entre 13 et 30%, par exemple. Sachant que ces grains de riz peuvent être séchés par des moyens conventionnels, on peut ainsi obtenir des grains de riz séchés présentant un pourcentage en poids en eau de l'ordre de 5 à moins de 13%, de préférence 5 à 7%, par exemple.

Les grains de riz selon la présente invention peuvent contenir, en pourcentage en poids, une quantité de matière grasse comprise entre 3 et 9% environ, par exemple.

Les grains de riz selon la présente invention peuvent comprendre un pourcentage en poids en polypropylène glycol alginate compris entre 0,1 et 3%, environ.

Les grains de riz obtenus selon le présent procédé peuvent être réhydratés indifféremment avec de l'eau froide, tiède ou bouillante, par exemple. On entend ainsi par l'expression « reconstituable à froid », la reconstitution de grains de riz par simple trempage dans de l'eau à température ambiante. Ceci permet d'obtenir des grains de riz hydratés et gonflés dont la texture et la forme sont comparables à des grains de riz cuits traditionnels. Cette faculté de réhydratation à froid constitue un avantage considérable de ce produit pour la réalisation de desserts froids à base de riz par exemple, tels que du riz au lait par exemple.

Le polypropylène glycol résulte de l'estérification du groupe carboxyle d'un polymère d'acide alginique par du propylène glycol alginate Cette estérification réduit le caractère ionique de l'alginate ce qui lui permet de développer sa viscosité en l'absence de calcium. D'autre part l'estérification confère un caractère lipophile au produit. Différents types de polypropylène glycol alginates existent et se différencient par le degré d'estérification ainsi que par le degré de polymérisation. Ce degré d'estérification se définit comme étant le pourcentage de résidus carboxyle ayant réagi avec le propylèneglycol. Le degré de polymérisation définit le nombre d'unité monomériques reliées entre elles pour former le polymère. Ainsi, à une concentration donnée, plus le degré de polymérisation est élevé, plus la viscosité du mélange est élevée.

Dans le procédé selon la présente invention, on peut mettre en oeuvre n'importe quel type de polypropylène glycol alginate de degré de polymérisation et d'estérification varié. Cependant il a été remarqué, et ceci de manière surprenante, que les meilleurs résultats sont obtenus avec la mise en oeuvre de polypropylène glycol alginate à faible degré de polymérisation. Un tel produit tel que le KELCOLOID S commercialisé par la société Nutrasweet®, par exemple, se caractérise par une viscosité de l'ordre de 10-100 cP, de préférence 10-50 cP, à 20-30°C en solution à 0,5-1,5%. Cette viscosité est la plus faible des viscosités obtenues avec les différents popypropylène glycol disponibles sur le marché. Aussi, il est d'autant plus étonnant que ce type préférentiel d'ingrédient fournisse les meilleurs résultats malgré une très faible viscosité car les forces de cisaillement au sein de l'extrudeur ont tendance à réduire très fortement la viscosité et la cohésion du mélange. En effet, on souhaite obtenir une viscosité et une cohésion importante grâce à l'utilisation de polypropylene glycol alginate developpant cette cohésion en absence d'ion calcium. Sachant que les forces de cisaillement réduisent la viscosité il est étonnant d'observer que l'on conserve un maximum de cohésion au mélange lors de son extrusion avec à l'emploi d'un tel ingrédient. Ainsi, le mélange comprenant un tel polypropylene glycol alginate présente-t-il en sortie d'extrudeur une texture suffisamment compacte, adéquate pour la mise en forme sous la forme de grains de riz.

On a pu donc remarquer que les grains de riz selon la présente invention présentent après reconstitution une texture similaire à des grains de riz traditionnels. De plus, la texture des grains de riz selon l'invention, après reconstitution avec de l'eau ou du lait, reste constante dans le temps après leur reconstitution, c'est à dire ferme et non pas molle, spongieuse et élastique. En effet le grains de riz cuits-extrudés à base d'alginate, présentent après reconstitution une évolution de leur texture défavorable. Ainsi de tels grains deviennent-ils mous, spongieux et élastiques quelques minutes après la reconstitution et de plus ces grains ne sont pas homogènes. Les grains de riz selon l'invention présentent donc une texture très proche des grains traditionnels cuits mais aussi une stabilité de cette texture après reconstitution, ce qui évite l'obtention de grains mous, élastiques et hététogènes.

Le mélange peut contenir de 13 à 30% d'eau, par exemple, ce qui, combiné au niveau d'énergie mécanique appliquée qui peut être de l'ordre de 80 à 120 Watt par kilogramme de mélange, permet d'atteindre un degré de gélatinisation de l'amidon compris entre 50 et 95% environ, préférentiellement 75 et 85%, tout en évitant l'obtention d'un produit trop collant.

L'obtention d'un taux de gélatinisation de 100% nécessite une énergie mécanique plus élevée, ce qui entraîne une destruction de la cohésion du mélange due au polypropylène glycol alginate et mène, de plus, à des grains de riz dont la texture est molle et éloignée de celle de grains de riz cuits traditionnels.

Il est toujours possible d'ajouter des arômes, épices et/ou colorants pendant ou après l'extrusion, par exemple.

Le procédé et les grains de riz selon la présente invention sont décrit plus en détail dans les exemples suivants où les pourcentages sont indiqués en poids.

### EXEMPLE 1

Le mélange pulvérulent suivant est préparé : 98,7% de farine de riz, 0,8% de polypropylène glycol alginate Kelcoloid S ® (commercialisé par la société NutraSweet), 0,5% de Myvaplex® (glycerol monostearate de Mg) (commercialisé par la société DOLDER AG, Suisse) et 0,3% de diphosphate de sodium. 50 kg du mélange précédent sont introduits en même temps que 12 kg d'eau et 4 kg de graisse de palme hydrogénée dans un cuiseur-extrudeur de 1500 mm de long. La vitesse de rotation de la vis est fixée à 220 tours par minutes et la pression dans l'extrudeur est de 90 bar. Durant la cuisson-extrusion, la mélange est progressivement mélangé et transporté dans les 2 premières zones du cuiseur-extrudeur à température ambiante. Le mélange est ensuite malaxé chauffé progressivement jusqu'à 80°C puis 110°C dans les trois zones suivantes du cuiseur-extrudeur. Enfin, le mélange est refroidi jusqu'aux environ de 60°C dans les deux dernières zones du cuiseur-extrudeur. Le mélange est enfin extrudé à travers une filière percée de trous de section ovoïde et équipée d'un couteau rotatif permettant d'obtenir des petit grains ayant la forme de grains de riz.

Les grains de riz ainsi obtenus présentent un taux de gélatinisation de l'amidon de 80% et un taux d'humidité de 21%. Ces grains peuvent être conservés réfrigérés ou séchés jusqu'à un taux d'humidité de l'ordre de 5%.

Les grains séchés puis refroidis sont emballés hermétiquement dans des sacs en plastique et conservés à température ambiante.

### EXEMPLE 2

Un riz au lait est préparé à l'aide des grains de riz séchés fabriqués selon l'exemple 1.

125 g de riz selon la présente invention sont mélangés avec 85 g de sucre en poudre, une demi-cuilleré de cannelle pilée, une pincée de sel, et 0.5 litre de lait chaud. Le tout est mélangé soigneusement et laissé de côté pendant 10 à 15 minutes. On obtient ainsi un riz au lait que l'on peut consommer tiède ou froid présentant une texture et un goût particulièrement agréables et comparables à celle d'un riz au lait réalisé selon un recette traditionnelle impliquant une longue étape de cuisson.

### EXEMPLE 3

Une salade de riz est préparée à l'aide des grains de riz non séchés fabriqués selon l'exemple 1.

100 g de grains non séchés sont mis en contact avec 300 ml d'eau à température ambiante, deux tomates concassées, du sel et du poivre. Le tout est mélangé et mis de coté dans un réfrigérateur pendant 1 heure. On obtient ainsi une salade de riz fraîche dont le goût et la texture sont tout à fait comparables à une salade de riz traditionnelle.

### EXEMPLE 4

Une salade de riz est préparée de manière analogue à celle préparée à l'exemple 3 sauf que l'on utilise 80 g de grains de riz séchés.

## Revendications

1. Grains de riz cuits-extrudés reconstituables à froid, comprenant de la farine de riz dont le taux de gélatinisation est compris entre 50 et 95%, de préférence entre 75 et 85%, de 5 à 13% d'eau, de la matière grasse, du polypropylène glycol alginate et un émulsifiant ou un mélange d'émulsifiants.

2. Grains de riz selon la revendication 1, comprenant 5 à 7% d'eau, 3 à 9% de matière grasse, 0,1 à 3% de polypropylène glycol alginate et 0,1 à 1% d'un émulsifiant ou d'un mélange d'émulsifiantS

3. Grains de riz selon la revendication 1, **caractérisés en ce que** le polypropylène glycol alginate présente un taux de polymérisation correspondant à une viscosité de l'ordre de 10-100 m Pa.s (cP), de préférence 10-50 m Pa.s (cP), à 20-30°C en solution à 0,5-1,5%.

4. Procédé de fabrication de grains de riz reconstituables comprenant les étapes suivantes :
- cuisson d'un mélange de farine de riz, d'eau, de matière grasse, de polypropylène glycol alginate et d'émulsifiant dans un cuiseur-extrudeur à une température comprise entre 70 et 150°C de manière à gélatiniser partiellement l'amidon,
- extrusion du mélange cuit sous forme de grains de riz et
- séchage des grains de riz extrudés à une teneur en eau de 5 à moins de 13%.

5. Procédé selon la revendication 4, dans lequel le mélange comprend en pourcentage en poids 65 à 85% de farine de riz, 0,1 à 3% de polypropylène glycol alginate, 13 à 30% d'eau, 3 à 9% de matière grasse et 0,1 à 1% d'un émulsifiant ou d'un mélange d'émulsifiants

6. Procédé selon la revendication 4, dans lequel les grains de riz une fois extrudés sont séchés jusqu'à une teneur en eau de l'ordre de 5 à 7%.

7. Procédé selon la revendication 4, dans lequel on applique une énergie mécanique comprise entre 80 et 120 Watt par kilogramme de mélange traité lors de la cuisson-extrusion.

8. Procédé selon la revendication 4, dans lequel on gélatinise le mélange jusqu'à un degré de gélatinisation compris entre 50 et 95% et de préférence entre 75 et 85%.

## Patentansprüche

1. Kalt rekonstituierbare kochextrudierte Reiskörner, die Reismehl mit einem Gelierungsgrad von 50 bis 95 %, vorzugsweise 75 bis 85 %, 5 bis 13 % Wasser, Fett, Polypropylenglycolalginat und einen Emulgator oder eine Mischung von Emulgatoren aufweisen.

2. Reiskörner nach Anspruch 1, die 5 bis 7 % Wasser, 3 bis 9 % Fett, 0,1 bis 3 % Polypropylenglycolalginat und 0,1 bis 1 % Emulgator oder Emulgatormischung aufweisen.

3. Reiskörner nach Anspruch 1, **dadurch gekennzeichnet, dass** das Polypropylenglycolalginat einen Polymerisationsgrad aufweist, der einer Viskosität von etwa 10-100 mPa.s (cP), vorzugsweise 10-50 mPa.s (cP), bei 20-30°C in einer 0,5-1,5 %-igen Lösung entspricht.

4. Verfahren zur Herstellung von rekonstituierbaren Reiskörnern, umfassend die folgenden Schritte:
- Kochen einer Mischung aus Reismehl, Wasser, Fett, Polypropylenglycolalginat und Emulgator in einem Kochextruder bei einer Temperatur zwischen 70 und 150°C so, dass die Stärke teilweise geliert,
- Extrusion der gekochten Mischung in Form von Reiskörnern und
- Trocknung der extrudierten Reiskörner bis zu einem Wassergehalt von 5 bis weniger als 13 %.

5. Verfahren nach Anspruch 4, bei dem die Mischung, in Gewichtsprozent, 65 bis 85 % Reismehl, 0,1 bis 3 % Polypropylenglycolalginat, 13 bis 30 % Wasser, 3 bis 9 % Fett und 0,1 bis 1 % Emulgator oder Emulgatormischung aufweist.

6. Verfahren nach Anspruch 4, bei dem die extrudierten Reiskörner bis zu einem Wassergehalt von etwa 5 bis 7 % getrocknet werden.

7. Verfahren nach Anspruch 4, bei dem man bei der Kochextrusion eine mechanische Energie von 80 bis 120 Watt pro kg behandelter Mischung anlegt.

8. Verfahren nach Anspruch 4, bei dem man die Mischung bis zu einem Gelierungsgrad zwischen 50 und 95 % und vorzugsweise zwischen 75 und 85 % geliert.

## Claims

1. Cooked-extruded rice grains reconstitutable in the cold, comprising rice flour with a gelatinization index of between 50 and 95%, preferably of between 75 and 85%, from 5 to 13% of water, fat, polypropylene glycol alginate and an emulsifier or a mixture of emulsifiers.

2. Rice grains according to Claim 1 comprising 5 to 7% of water, 3 to 9% of fat, 0.1 to 3% of polypropylene glycol alginate and 0.1 to 1% of an emulsifier or a mixture of emulsifiers.

3. Rice grains according to Claim 1, **characterized in that** the polypropylene glycol alginate has a degree of polymerization corresponding to a viscosity in the order of 10-100 mPa.s (cP), preferably 10-50 mPa.s (cP), at 20-30°C in 0.5-1.5% solution.

4. Process for the manufacture of reconstitutable rice grains, comprising the following steps:
- cooking of a mixture of rice flour, water, fat, polypropylene glycol alginate and emulsifier in a cooker-extruder at a temperature of between 70 and 150°C so as to partially gelatinize the starch,
- extrusion of the cooked mixture in the form of rice grains and
- drying of the extruded rice grains to a water content of 5 to less than 13%.

5. Process according to Claim 4 in which the mixture comprises, by weight, 65 to 85% of rice flour, 0.1 to 3% of polypropylene glycol alginate, 13 to 30 % of water, 3 to 9% of fat and 0.1 to 1% of an emulsifier or a mixture of emulsifiers.

6. Process according to Claim 4 in which, after extrusion, the rice grains are dried to a water content in the order of 5 to 7%.

7. Process according to Claim 4 in which a mechanical energy of between 80 and 120 watts per kilogram of treated mixture is applied in the cooking-extrusion.

8. Process according to Claim 4 in which the mixture is gelatinized to a gelatinization index of between 50 and 95%, preferably of between 75 and 85%.
